# EUROPÄISCHE PATENTSCHRIFT

(11) **EP 1 816 372 B1**
(45) Veröffentlichungstag und Bekanntmachung des Hinweises auf die Patenterteilung: **23.06.2010**
(21) Anmeldenummer: 07001432.9
(22) Anmeldetag: 24.01.2007
(51) Int. Cl.: F16G 13/06, F16G 15/00

(54) **Ketten-Verschlussglied**
Chain locking link
Maillon de fermeture de chaîne

(30) Priorität: 04.02.2006 DE 102006005157
(43) Veröffentlichungstag der Anmeldung: 08.08.2007
(73) Patentinhaber: SRAM Deutschland GmbH, 97404 Schweinfurt (DE)
(72) Erfinder: Santos, Pedro, 2790-226 Carnaxide (PT)

(56) Entgegenhaltungen:
- DE-A1- 4 431 614
- DE-A1-102007 018 361
- US-A- 2 687 651
- US-A- 5 291 730

## Beschreibung

Die vorliegende Erfindung betrifft ein Ketten-Verschlussglied für eine Antriebskette eines Fahrrades und besteht gemäß dem Oberbegriff des Hauptanspruches aus zwei, mit jeweils einem feststehenden Kettenbolzen ausgestatteten Außenlaschen, die bei der Kettenmontage ohne Werkzeug ineinander eingehängt werden.

Antriebsketten für Fahrräder mit Naben- oder Kettenschaltung setzen sich aus zueinander schwenkbar angeordneten Kettengliedern zusammen, mit deren Hilfe ein geschlossener Kettenzug zur Antriebskraftübertragung ausgebildet wird. Diese Kettenglieder weisen Innenräume zwischen den Innen- und den Außenlaschen auf, in die jeweils die Zähne der Kettenräder eingreifen können. Bei der Gestaltung der Kettenglieder ist die Erfüllung verschiedener Funktionen, insbesondere die Schaltfunktion zu berücksichtigen. Wenn die Kette ausgebaut werden soll, beispielsweise zu Wartungsarbeiten ist ein Öffnen der Kette erforderlich. Dies wird durch ein besonders gestaltetes, zu öffnendes Verschlussglied bewerkstelligt.

In der DE 44 31 614 A1 wird ein relativ schmal bauendes Kettenverschlussglied gezeigt. Es besteht aus zwei identischen Verschlussteilen mit jeweils einer Außenlasche und einem feststehenden Kettenbolzen. Die Laschen sind jeweils mit einem Langloch ausgestattet das am zur Mitte zeigenden Ende einen größeren Durchmesser aufweist, um das Einfädeln des freien Endes des Kettenbolzens, an dem sich eine Nut befindet, zu ermöglichen. Diese Nut ist etwas breiter als die Laschenstärke und der Abstand der Nut zum Bolzenende ist geringer als die Laschenstärke. Das andere Ende des Langloches ist so tief angesenkt, dass der Bolzenkopf im montierten Zustand formschlüssig arretiert wird und nur teilweise über die Außenkontur der Lasche hinausragt. Beim Verschließen der Kette werden die Kettenbolzen der beiden Verschlussteile in die am jeweiligen Kettenende befindlichen Innenlaschen der offenen Kette so eingefädelt, dass sich die Verschlussteile spiegelbildlich gegenüberstehen. Die Kettenenden werden zusammen gezogen, damit die freien Enden der Kettenbolzen durch den größeren Endabschnitt des Langloches der gegenüber liegenden Außenlasche geschoben werden können. Beim Straffen der Kette gelangen die Kettenbolzen in ihre Endposition und rasten mit dem Bolzenkopf in die dafür vorgesehe Ansenkung am anderen Ende des Langloches ein. Die Demontage erfolgt ebenfalls ohne Werkzeug, dabei wird die Kette am Verschlussglied zusammengezogen und die beiden Verschlussteile zusammengedrückt, damit sich der Bolzenkopf aus der jeweiligen, formschlüssigen Arretierung in der Ansenkung herausschiebt und dann zum größeren Endabschnitt des Langloches verschoben werden kann. In dieser Position können die Kettenbolzen aus den Außenlaschen ausgefädelt und somit die Kette geöffnet werden.

Dieses Ketten-Verschlussglied ist sehr montagefreundlich eignet sich aber, wegen des Überstandes des Bolzenkopfes der über die Kontur der Außenlasche hinaus ragt, nicht für aktuelle Kettenschaltungen mit einer hohen Anzahl von Ritzeln, insbesondere nicht um deren Einbauabstand zu minimieren. Des Weiteren ergibt die große Nutbreite am Bolzenkopf eine unerwünschte, das Schaltverhalten der Kette beeinträchtigende, seitliche Beweglichkeit der Kette im Bereich des Verschlussgliedes.

Ausgehend vom Stand der Technik liegt der Erfindung die Aufgabe zugrunde, ein Ketten-Verschlussglied zu schaffen, das hinsichtlich des Bolzenüberstandes bzw. der daraus resultierenden Kettenbreite und der seitlichen Beweglichkeit der Kette im Verschlussbereich eine wesentliche Verbesserung darstellt.

Zudem soll eine Demontagesicherung für den Kettenbolzen in der Ausnehmung der Außenlasche vorgesehen, sowie eine stabile Fixierung des feststehenden Kettenbolzenendes an der Außenlasche gewährleistet werden.

Die Lösung der Aufgabe wird gemäß den kennzeichnenden Merkmalen von Anspruch 1 und der weiteren Ansprüche durch eine spezielle Ausgestaltung der Ausnehmungen in der Außenlasche und der Endbereiche des Kettenbolzens realisiert.

Die Reduzierung des Bolzenüberstandes wird durch einen kürzeren Bolzenkopf und einer zusätzlichen Vergrößerung der Ansenktiefe zur Aufnahme des Bolzenkopfes ermöglicht. Die Kettenbreite wird maßgebend von der Länge des Kettenbolzens bestimmt. Bei den bisherigen Lösungen ragt der Bolzenkopf, beim Zusammenfügen der Verschlussteile, über die gegenüberliegende Außenlasche hinaus, bevor er in der Endstellung in die Ansenkung eintauchen konnte. Hierbei gleitet die Ringfläche der Bolzennut, im Verschiebebereich des Langloches, entlang der Außenseite der Außenlasche. Der Abstand zwischen Bolzenkopf und Bolzenfuß und damit die Kettenbolzenlänge kann verringert werden, wenn der Bolzenkopf im Verschiebebereich nicht mehr an der Laschenaußenseite, sondern entlang eines tiefer liegenden Fasengrundes vom großen Enddurchmesser des Langloches zur Ansenkung verschoben werden kann. Die gegenüberliegenden Ränder entlang des Verschiebebereiches des Bolzenkopfes, zwischen den Enddurchmessern des Langloches, sind mit einer entsprechend tiefen Anfasung ausgestattet, so dass eine Montage, bzw. eine gegenseitige Verschiebung der beiden Verschlussteile auch ohne Werkzeug gelingt.
Die Reduzierung des Abstandes zwischen dem in der Außenlasche festsitzenden Bolzenfußes und dem Bolzenkopf verringert zudem bei zusammengefügten Verschlussteilen das Spiel, in Längsrichtung des Kettenbolzens, zwischen dem Bolzenkopf und der gegenüberliegenden Außenlasche und damit die seitliche Beweglichkeit der Kette im Verschlussbereich.

Eine Demontagesicherung am Verschlussglied soll ein ungewolltes Lösen des Bolzenkopfes aus der Ansenkung und eine eventuelle Bewegung in Richtung Verschiebebereich, verursacht durch einen seitlichen Stoß auf die Kette, verhindern. Dies wird durch eine Verengung des Langloches im Bereich der Ansenkung erreicht, die den Kettenbolzen am Bolzennutdurchmesser bzw. am Bolzenkopfdurchmesser einklemmt. Hierzu verengt sich die Langlochbreite bzw. der Abstand zwischen den Fasen, insbesondere zwischen den gegenüberliegenden Fasenrändern, an der entsprechenden Stelle in Richtung Ansenkung. Somit wird der Kettenbolzen stramm (vorzugsweise ohne Werkzeug) in seine Endstellung, wenn der Bolzenkopf in die Ansenkung eintaucht, gebracht. Eine Demontagesicherung wird auch durch eine geeignete Klemmstelle im Bereich der Bolzennutbreite geschaffen. Wenn der Bolzenkopf mit der, durch die Bolzennut gebildeten, Ringfläche entlang des Fasengrundes, mit Kraftaufwand über eine Klemmschräge geschoben wird, entsteht eine axial wirksame Klemmkraft im Bereich der Ansenkung.

Es kann auch eine Demontagesicherung aus einer Kombination der bereits beschriebenen Lösungen realisiert werden.

Des Weiteren wird zur Montageerleichterung vorgeschlagen, dass die Fasen bzw. deren Fasengrund entlang des Verschiebebereiches des Langloches als Schiefe-Ebenen ausgebildet sind, die in Richtung Ansenkung ansteigen. Der Bolzenkopf gleitet dann bei der Montage im Verschiebebereich leichtgängig entlang der ansteigenden Schiefen-Ebenen in seine Endlage in die Ansenkung, die tiefer verläuft als der Fasengrund. Ist eine Klemmstelle als Demontagesicherung vorgesehen, so kann diese, kurz vor dem Einrasten des Bolzenkopfes in die Ansenkung, mit einer entsprechend hohen Verschiebekraft überwunden werden.

Auch das feststehende Ende des Kettenbolzens, insbesondere der Bolzenfuß, darf nicht über die Außenkontur der Außenlasche hinaus ragen. Der Kettenbolzen soll dennoch fest in der Außenlasche verankert und axial gesichert sein. Hierzu ist der Durchmesser der Bolzenbohrung an der Außenkontur der Außenlasche erweitert bzw. aufgebohrt. Der am Bolzenfuß mit einer zylindrischen oder trichterförmigen Aussparung versehene Kettenbolzen wird bei der Montage in die Bolzenbohrung gesteckt und mit einem Stempel aufgeweitet. Dabei schmiegt sich der aufgeweitete Endbereich des Bolzenfußes an den Abschnitt der Bolzenbohrung mit dem größeren Durchmesser an. Es entsteht eine formschlüssige Verbindung des Kettenbolzens mit der Außenlasche, wodurch ein Herausziehen des Kettenbolzens in Richtung Bolzenkopf sicher verhindert wird.

Dieses erfinderische Ketten-Verschlussglied ermöglicht eine sehr schmale Kette und deren Verwendung für Kettenschaltungen mit maximaler Ritzelanzahl. Das Kettenverschlussglied gewährleistet eine sichere Kettenverbindung und vermindert, gegenüber dem Stand der Technik, die seitliche Beweglichkeit der Kette im Verschlussbereich. Die Demontagesicherung verhindert zuverlässig ein ungewolltes Öffnen des Kettenverschlusses. Die beiden Verschlussteile, bestehend aus jeweils einer Außenlasche mit einem feststehenden Kettenbolzen, können ohne Werkzeug zur Verbindung der Kettenenden zusammen gesteckt und mit entsprechender Verschiebekraft, zur Überwindung der Demontagesicherung, in ihre Endstellung gebracht werden. Eine Montagehilfe in Form einer Anlaufschräge, die durch einen leicht ansteigenden Verlauf des Fasengrundes im Verschiebebereich gebildet wird, erleichtert am Anfang des Verschiebevorganges das Aufgleiten des Bolzenkopfes in Richtung Ansenkung.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkende Beispiele des erfinderischen Ketten-Verschlussgliedes anzusehen sind.
Fig. 1 zeigt eine 3 D-Darstellung eines offenen Ketten-Verschlussgliedes
Fig. 2 zeigt das Verschlussteil im Schnitt
Fig. 3 zeigt die Außenlasche mit verengtem Langloch
Fig. 4 zeigt die Außenlasche wie in Fig. 3 mit zusätzlich verengtem Fasenrand
Fig. 5 zeigt die Außenlasche wie in Fig. 4 mit zusätzlicher Klemmschräge bzw. einer Schiefe-Ebene am Fasengrund

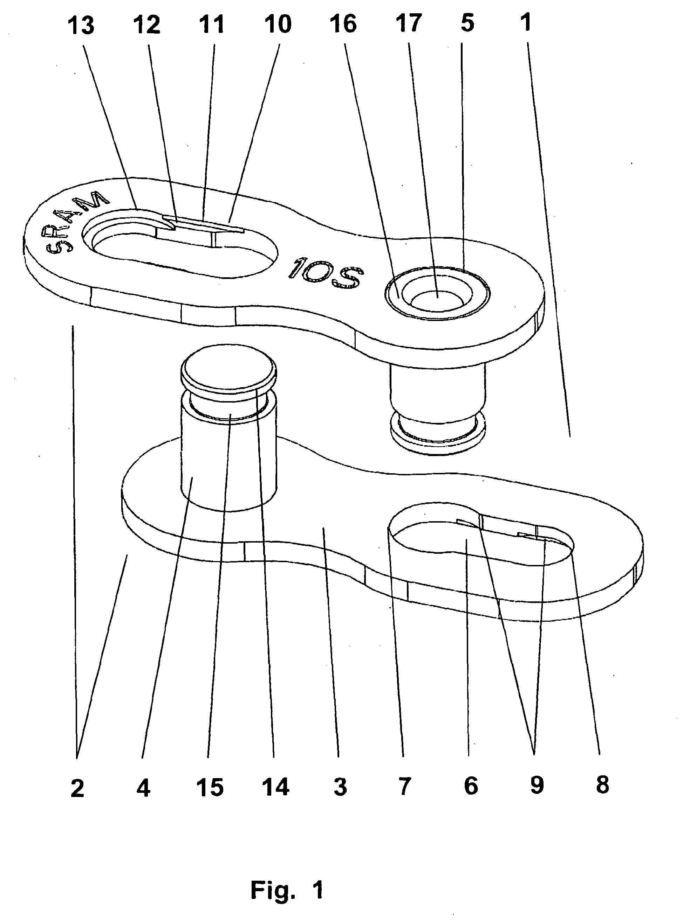

Figur 1 zeigt ein geöffnetes Ketten-Verschlussglied 1 bestehend aus zwei Verschlussteilen 2 mit je einer Außenlasche 3 und einem daran befestigten Kettenbolzen 4. In der Außenlasche 3 befinden sich zwei Öffnungen in Form einer Bolzenbohrung 5 und einem Langloch 6. Das Langloch 6 hat einen großen Enddurchmesser 7 und einen kleinen Enddurchmesser 8 und einen dazwischen liegenden Verschiebebereich 9. Die an der Außenseite der Außenlasche 3 befindlichen Ränder des Verschiebebereiches 9 weisen jeweils eine Fase 10 mit einem Fasenrand 11 und einem Fasengrund 12 auf. Am kleinen Enddurchmesser 8 befindet sich die Ansenkung 13, wobei diese Ansenkung 13 tiefer als der Fasengrund 12 verläuft. Der Kettenbolzen 4 hat einen Bolzenkopf 14, eine Bolzennut 15 einen Bolzenfuß 16 sowie eine axial im Bolzenfuß 16 verlaufende Aussparung 17. Bei der Verbindung des Kettenbolzens 4 mit der Außenlasche 3 wird der Kettenbolzen 4 in die Bolzenbohrung 5 gesteckt und die Aussparung 17 so stark aufgeweitet, dass sich der Bolzenfuß 16 fest an die Bolzenbohrung 5 anschmiegt. Beim Schließen der Kette mit dem Ketten-Verschlussglied 1 werden die beiden Verschlussteile 2 zusammengefügt, dabei wird der Bolzenkopf 14 des einen Verschlussteils 2 in den gegenüberliegenden großen Enddurchmesser 7 des Langloches 6 des anderen Verschlussteils eingefädelt. Durch gegenseitiges Verschieben der Verschlussteile 2 gleiten die Kettenbolzen 4 mit der Bolzennut entlang des Fasengrundes 12 in die tiefer liegende Ansenkung 13 und rastet dort ein. Um eine für Kettenschaltungen, mit mehr als acht Ritzeln, erforderliche schmale Kettenbreite zu erzielen ist zum einen die Höhe des Bolzenkopfes minimiert bzw. wesentlich kleiner als die Außenlaschenstärke und findet ohne störenden Überstand in der Ansenkung 13 Platz. Zudem sind an den Rändern des Langloches 6, im Verschiebebereich 9, Fasen 10 angeordnet. Dies ermöglicht eine Reduzierung der Kettenbolzenlänge 4, da nun der Bolzenkopf 14 nicht mehr an der Außenseite der Außenlasche 3, sondern entlang des tiefer liegenden Fasengrundes 12 zur Ansenkung 13 verschoben wird. Damit der Bolzenkopf 14 in die Ansenkung 13 einrasten kann liegt die Ansenkung 13 tiefer als der Fasengrund 12, dies gilt zumindest für den Bereich des an die Ansenkung 13 angrenzenden Fasengrundes 12.

Trotz Einrasten des Bolzenkopfes 14 in die Ansenkung 13 kann das Ketten-Verschlussglied 1 bei ungünstigen Betriebsverhältnissen, verursacht durch einen seitlichen Stoß auf das Leertrumm der Kette, geöffnet werden. Eine Verengung des Langloches 6 im Bereich der Ansenkung 13 sorgt hier für Abhilfe. Diese Verengung klemmt den Kettenbolzen 4 an der Mantelfläche der Bolzennut 15 und oder an der Ringfläche der Bolzennut 15 und oder am Bolzenkopf 14 oder an einer Kombination dieser Möglichkeiten. Somit wird ein kraftfreies Öffnen des Ketten-Verschlussgliedes 1 auch dann verhindert, wenn der Bolzenkopf 14 durch eine axiale Verschiebung in der Ansenkung 13 auf das Niveau des Fasengrundes 12 gelangt und dann unbeabsichtigt entlang der Fasen 10 zum großen Enddurchmesser 7 verschoben werden könnte.

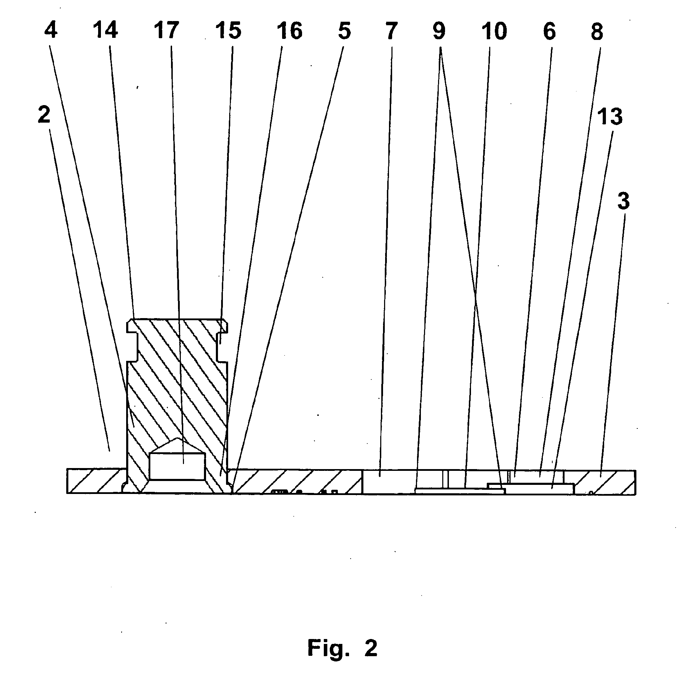

Figur 2 zeigt das Verschlussteil 2 mit dem in der Außenlasche 3 befestigten Kettenbolzen 4. Die Bolzenbohrung 5 ist im Bereich der Außenseite der Außenlasche 3 erweitert bzw. weist einen größeren Durchmesser auf. Bei der Montage des Kettenbolzens 4 mit der Außenlasche 3 wird der Kettenbolzen 4 in die Bolzenbohrung 5 geschoben und die Aussparung, in Form eines Sackloches, soweit aufgeweitet, dass sich der Bolzenfuß 16 an die Kontur der Bolzenbohrung 5 anschmiegt. Hierdurch entsteht eine formschlüssige Verbindung, die ein Herausziehen des Kettenbolzens 4 aus der Außenlasche 3 sicher verhindert. Die Außenlasche 3 weist ein Langloch 6 mit einem großen Enddurchmesser 7 und einem gegenüber liegenden, kleinen Enddurchmesser 8 auf. Der Verschiebebereich 9, entspricht dem Weg, den der am anderen Verschlussteil befindliche Kettenbolzen 4, vom Einfädeln in das Langloch 6 bis zum Einrasten des Bolzenkopfes 14 in die Ansenkung 13 verschoben wird. Der Rand des Langloches 6 ist auf der Außenseite der Außenlasche 3 im Schiebebereich 9 vom großen Enddurchmesser 7 bis zur Ansenkung 13 mit einer Fase 10 ausgestattet. Die Fasentiefe ist geringer als die Tiefe der Ansenkung 13, damit der Bolzenkopf 14 in seiner Endstellung, wenn das Kettenverschlussglied geschlossen ist, einrasten kann. Während des Verschiebevorganges gleitet der Bolzenkopf 14 mit der angrenzenden Ringfläche der Bolzennut über den Fasengrund der Fase 10. Der Abstand der Ränder des Langloches 6 ist im Verschiebebereich 9, ebenso wie der kleine Enddurchmesser 8, größer als der Durchmesser der Bolzennut 15.

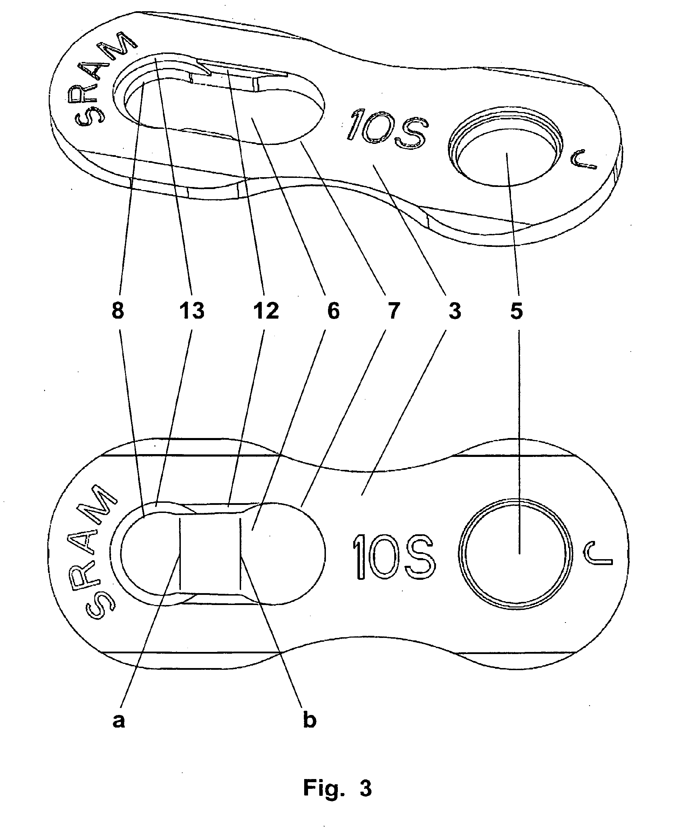

Figur 3 zeigt die Außenlasche 3 mit sich verengenden Langlochrändern und der erweiterten Bolzenbohrung 5. Das Langloch 6 hat am einen Ende, das zur Bolzenbohrung 5 zeigt, einen großen Enddurchmesser 7 und am anderen Ende einen kleinen Enddurchmesser 8. Die Ansenkung 13 nimmt im geschlossenen Zustand des Ketten-Verschlussgliedes 1 den Bolzenkopf 14 auf. Die nicht gekrümmten Ränder des Langloches 6 verlaufen nicht parallel. Der Abstand der Ränder verringert sich in Richtung kleiner Enddurchmesser 8 soweit, dass für den Bolzennutgrund eine Klemmstelle zwischen den Langlochrändern entsteht. Wenn der Bolzenkopf 14 beim Schließen des Ketten-Verschlussgliedes 1 über den Fasengrund 12 gleitet, soll kurz vor dem Einrasten in die Ansenkung 13 eine mit Kraftaufwand zu überwindende Engstelle zwischen den Langlochrändern passiert werden. Diese Engstelle wirkt als Demontagesicherung, wenn der Formschluss des in der Ansenkung 13 sitzenden Bolzenkopfes 14 durch eine unbeabsichtigte axiale Kettenbolzenverschiebung aufgehoben wird. Der Abstand "a", zwischen den Langlochrändern, ist dabei größer und der Abstand "b" geringfügig kleiner als der Bolzennutdurchmesser.

Der Vorgang zum Öffnen des Ketten-Verschlussgliedes 1 wird erleichtert, wenn der Übergang vom Umfang des kleinen Enddurchmessers 8 zur Engstelle am Langlochrand nicht abrupt erfolgt, sondern einen wenn auch geringen, klemmfreien Bewegungsanlauf des Kettenbolzens 4 in Öffnungsrichtung erlaubt.

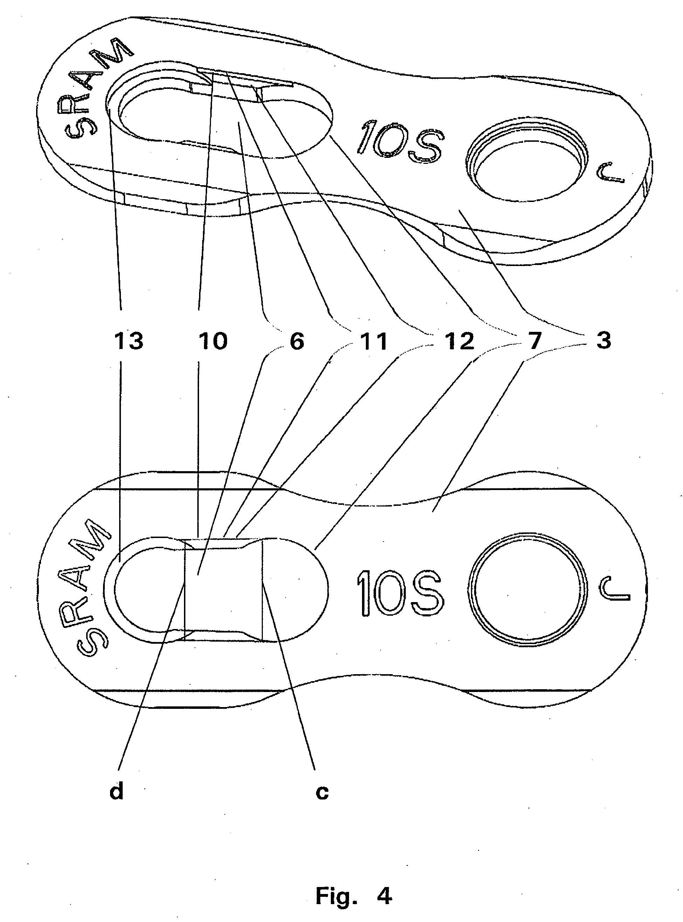

Figur 4 zeigt die Außenlasche 3 mit sich verengenden Langloch- und Fasenrändern 11. Neben der in Figur 3 gezeigten Verengung der Langlochränder verlaufen hier auch die gegenüberliegenden Fasen 10, insbesondere die Fasenränder 11 nicht parallel, sondern bilden eine Engstelle im Bereich der Ansenkung 13 . Der Abstand "c", der Fasenränder im Bereich des großen Enddurchmessers 7, ist dabei größer und der Abstand "d" im Bereich der Ansenkung 13 geringfügig kleiner als der Bolzenkopfdurchmesser. Wenn beim Schließen des Ketten-Verschlussgliedes der Bolzenkopf über den Fasengrund 12 gleitet, soll kurz vor dem Einrasten in die Ansenkung 13 eine mit Kraftaufwand zu überwindende Engstelle zwischen den Fasenrändern 11 passiert werden. Auch diese Engstelle wirkt als Demontagesicherung.

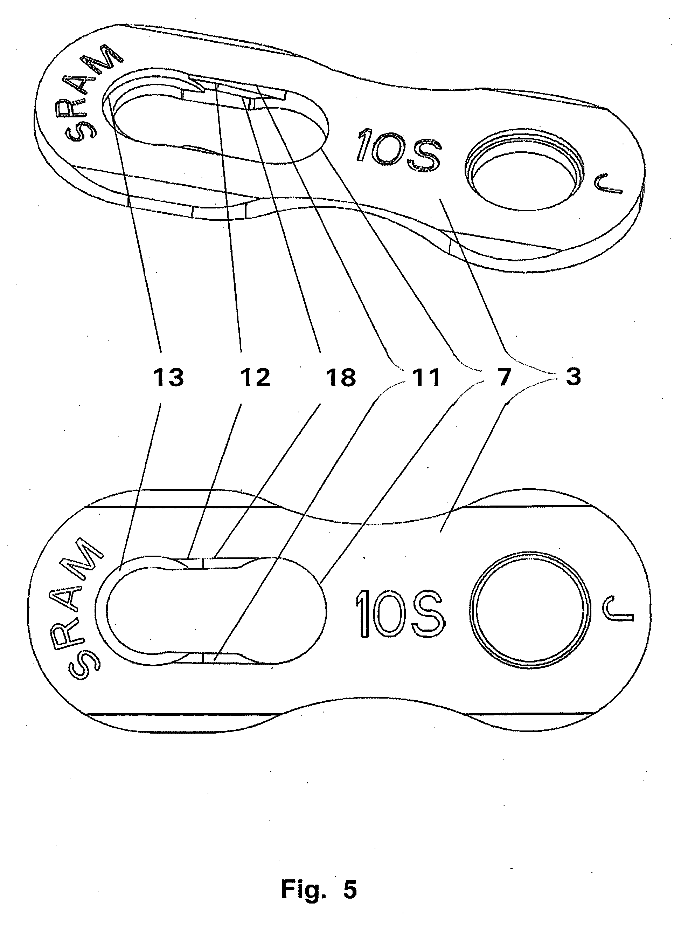

Figur 5 zeigt die Außenlasche 3 mit sich verengenden Langlochrändern, verengenden Fasenrändern 11 und zusätzlicher Klemmschräge 18 am Fasengrund 12 im Bereich der Ansenkung 13. Neben der in Figur 4 gezeigten Verengung der Langloch- und Fasenränder 11 verläuft hier der Fasengrund 12, der beiden gegenüberliegenden Fasen 10, nicht parallel zur Innenseite der Außenlasche 3, sondern bildet eine Klemmschräge 18 bzw. eine Schiefe-Ebene. Die Erhebung des Fasengrundes 12 an der Klemmstelle ist so dimensioniert, dass ein gegenseitiges Verschieben der Verschlussteile im Klemmbereich nur unter Krafteinwirkung erfolgen kann. Das Niveau des Fasengrundes 12, der an den großen Enddurchmesser 7 angrenzt, ist entsprechend tief angesetzt, so dass ein leichtgängiges Aufschieben des Bolzenkopfes ermöglicht wird. Somit dient beim Schließen des Ketten-Verschlussgliedes die Schiefe-Ebene im Bereich des großen Enddurchmessers 7 als Anlaufschräge und im Bereich der Ansenkung 13 als Klemmschräge 18 und erfüllt dort die Funktion einer Demontagesicherung.

### Bezugszeichenliste

- 1: Ketten-Verschlussglied
- 2: Verschlussteil
- 3: Außenlasche
- 4: Kettenbolzen
- 5: Bolzenbohrung
- 6: Langloch
- 7: Großer Enddurchmesser
- 8: Kleiner Enddurchmesser
- 9: Verschiebebereich
- 10: Fase
- 11: Fasenrand
- 12: Fasengrund
- 13: Ansenkung
- 14: Bolzenkopf
- 15: Bolzennut
- 16: Bolzenfuß
- 17: Aussparung
- 18: Klemmschräge

## Patentansprüche

1. Ketten-Verschlussglied (1) für eine Fahrradkette bestehend aus zwei Verschlussteilen (2) mit jeweils einer Außenlasche (3) und einem damit verbundenen feststehenden Kettenbolzen (4), wobei die Außenlasche (3) über ein Langloch (6) mit einem großen (7) und einem kleinen Enddurchmesser (8) sowie über eine Bolzenbohrung (5) verfügt und der Kettenbolzen (4) an einem Ende einen Bolzenkopf (14) mit einer umlaufenden Bolzennut (15) sowie am anderen Ende einen Bolzenfuß (16) aufweist,
wobei der kleine Enddurchmesser (8) des Langloches (6) den Kettenbolzen (4) an der Bolzennut (15) aufnehmen kann, und zur Aufnahme des Bolzenkopfes (14) mit einer Ansenkung (13) versehen ist und der große Enddurchmesser (7) größer ist als der Durchmesser des Bolzenkopfes (14);
wobei eine Rastverbindung zwischen Ansenkung (13) und Bolzenkopf (14) entsteht, wenn sich ein Bolzenkopf (14) in der Richtung der Achse des Kettenbolzens (4) in die Ansenkung (13) hinein bewegt und in der Ansenkung (13) aufgenommen wird; **dadurch gekennzeichnet,**
**dass** die Ränder des Langloches (6) zwischen den beiden Enddurchmessern (7, 8) entlang des Verschiebebereiches (9), der sich vom großen Enddurchmesser (7) bis zur Ansenkung (13) erstreckt jeweils mit einer Fase (10) ausgestattet sind, wobei die Fasentiefe zumindest im Bereich der Ansenkung (13) geringer ist als die Tiefe der Ansenkung (13).

2. Ketten-Verschlussglied (1) nach Anspruch 1,
**dadurch gekennzeichnet,**
**dass** sich der Abstand der Ränder des Langloches (6), zwischen den beiden Enddurchmessern, vom großen Enddurchmesser (7) hin zum kleinen Enddurchmesser (8) verringert, wobei der Abstand an der engsten Stelle (a) kleiner ist, als der Bolzennutdurchmesser.

3. Ketten-Verschlussglied (1) nach Anspruch 1,
**dadurch gekennzeichnet,**
**dass** die Fase (10) einen Fasenrand (11) und einen Fasengrund (12) aufweist und sich der Abstand der Fasenränder vom großen Enddurchmesser (7) des Langloches (6) in Richtung Ansenkung (13) verringert, wobei der Abstand an der engsten Stelle (d) der gegenüberliegenden Fasenränder (11) kleiner ist, als der Bolzenkopfdurchmesser.

4. Ketten-Verschlussglied (1) nach Anspruch 1,
**dadurch gekennzeichnet,**
**dass** die Fase (10) einen Fasenrand (11) und einen Fasengrund (12) aufweist und sich der Abstand zwischen Fasengrund (12) und der Innenseite der Außenlasche (3) vom großen Enddurchmesser (7) des Langloches (6) in Richtung Ansenkung (13) vergrößert und dabei eine Klemmschräge (18) bzw. der Fasengrund (12) eine Schiefe-Ebene bildet.

5. Ketten-Verschlussglied (1) nach den Ansprüchen 2 bis 4,
**dadurch gekennzeichnet,**
**dass** zur Demontagesicherung des Ketten-Verschlussgliedes (1) der jeweilige Kettenbolzen (4) durch eine entsprechende Engstelle, die am gegenüberliegenden Verschlussteil (2), insbesondere am Langloch (6) der Außenlasche (3), gegen unbeabsichtigtes Öffnen gesichert wird,
wobei die Engstelle die Langlochränder oder die Fasenränder (11) betrifft, die sich im Bereich des kleinen Enddurchmessers (8) des Langloches (6) befinden,
deren Abstände kleiner sind im Vergleich zu den Langlochrändern oder den Fasenrändern (11) im Bereich des großen Enddurchmessers (7);
wobei die entsprechende Engstelle der Außenlasche (3) am Bolzenkopfumfang und oder am Bolzennutumfang und oder an einer ringförmigen Bolzennutfläche oder an Kombinationen dieser Möglichkeiten wirksam wird.

6. Ketten-Verschlussglied (1) nach Anspruch 1,
**dadurch gekennzeichnet,**
**dass** die Höhe des Bolzenkopfes (14) gleich oder kleiner ist als die Tiefe der Ansenkung (13).

7. Ketten-Verschlussglied (1) nach den Ansprüchen 1 bis 5,
**dadurch gekennzeichnet,**
**dass** am Bolzenfuß (16) eine axial verlaufende Aussparung (17) angeordnet ist und der Durchmesser der Bolzenbohrung (5) im Bereich der Außenseite der Außenlasche (3) erweitert ist, damit der Kettenbolzen (4) durch Aufweiten des Bolzenfußes (16) nach der Montage fest und formschlüssig mit der Außenlasche (3) verbunden ist und beide das Verschlussteil (2) bilden.

## Claims

1. Chain closing link (1) for a bicycle chain, comprising two closing parts (2) with a respective outer link plate (3) and a fixed chain stud (4) connected thereto, the outer link plate (3) having an elongated hole (6), with a large end diameter (7) and a small end diameter (8), and a stud bore (5), and the chain stud (4) having a stud head (14) at one end, with an encircling stud groove (15), and a stud foot (16) at the other end, wherein the small end diameter (8) of the elongated hole (6) can receive the chain stud (4) by way of the stud groove (15) and, to receive the stud head (14), is provided with a countersink (13), and the large end diameter (7) is larger than the diameter of the stud head (14), wherein a latching connection is produced between the countersink (13) and stud head (14) when a stud head (14) is moved in the direction of the axis of the chain stud (4) into the countersink (13) and is received in the countersink (13); **characterized in that** the edges of the elongated hole (6) along the displacement region (9), which extends from the large end diameter (7) to the countersink (13), between the two end diameters (7, 8) are in each case provided with a chamfer (10), the chamfer depth being smaller, at least in the region of the countersink (13), than the depth of the countersink (13).

2. Chain closing link (1) according to Claim 1, **characterized in that** the distance of the edges of the elongated hole (6), between the two end diameters, is reduced from the large end diameter (7) towards the small end diameter (8), with the distance at the narrowest point (a) being smaller than the stud groove diameter.

3. Chain closing link (1) according to Claim 1, **characterized in that** the chamfer (10) has a chamfer edge (11) and a chamfer base (12), and the distance of the chamfer edges is reduced from the large end diameter (7) of the elongated hole (6) in the direction of the countersink (13), with the distance at the narrowest point (d) of the opposite chamfer edges (11) being smaller than the stud head diameter.

4. Chain closing link (1) according to Claim 1, **characterized in that** the chamfer (10) has a chamfer edge (11) and a chamfer base (12), and the distance between chamfer base (12) and the inside of the outer link plate (3) increases from the large end diameter (7) of the elongated hole (6) in the direction of the countersink (13) and, in the process, forms a clamping slope (18), or the chamfer base (12) forms a sloping plane.

5. Chain closing link (1) according to Claims 2 to 4, **characterized in that**, to safeguard the chain closing link (1) against disassembly, the respective chain stud (4) is secured against unintentional opening by means of a corresponding narrow point on the opposite closing part (2), in particular on the elongated hole (6) of the outer link plate (3), the narrow point relating to the elongated hole edges or the chamfer edges (11) which are located in the region of the small end diameter (8) of the elongated hole (6) and the distances between which are smaller in comparison to the elongated hole edges or the chamfer edges (11) in the region of the large end diameter (7); the corresponding narrow point of the outer link plate (3) being effective on the circumference of the stud head and/or on the circumference of the stud groove and/or on an annular stud groove surface or on a combination of these possibilities.

6. Chain closing link (1) according to Claim 1, **characterized in that** the height of the stud head (14) is equal to or smaller than the depth of the countersink (13).

7. Chain closing link (1) according to Claims 1 to 5, **characterized in that** a cut-out (17) running axially is arranged on the stud foot (16) and the diameter of the stud bore (5) is widened in the region of the outside of the outer link plate (3), so that, after installation, the chain stud (4) is connected in a fixed and form-fitting manner to the outer link plate (3) by widening of the stud foot (16), and the two parts form the closing part (2).

## Revendications

1. Maillon de fermeture de chaîne (1) pour un chaîne de bicyclette, constitué de deux parties de fermeture (2) ayant à chaque fois un flasque extérieur (3) et un boulon de chaîne (4) fixe connecté à celui-ci, le flasque extérieur (3) disposant d'un trou oblong (6) avec un grand diamètre (7) et un petit diamètre d'extrémité (8), ainsi que d'un alésage de boulon (5) et le boulon de chaîne (4) présentant à une extrémité une tête de boulon (14) avec une rainure de boulon périphérique (15) et à l'autre extrémité une base de boulon (16),
le petit diamètre d'extrémité (8) du trou oblong (6) pouvant recevoir le boulon de chaîne (4) au niveau de la rainure de boulon (15), et étant pourvu d'une dépression (13) pour recevoir la tête de boulon (14), et le grand diamètre d'extrémité (7) étant plus grand que le diamètre de la tête de boulon (14) ;
une connexion par encliquetage entre la dépression (13) et la tête de boulon (14) se produisant lorsqu'une tête de boulon (14) entre dans la direction de l'axe du boulon de chaîne (4) dans la dépression (13) et est reçue dans la dépression (13) ;
**caractérisé en ce que**
les bords du trou oblong (6) entre les deux diamètres d'extrémité (7, 8) sont configurés le long de la région de déplacement (9) qui s'étend depuis le grand diamètre d'extrémité (7) jusqu'à la dépression (13), avec un biseau (10) respectif, la profondeur du biseau, au moins dans la région de la dépression (13), étant plus petite que la profondeur de la dépression (13).

2. Maillon de fermeture de chaîne (1) selon la revendication 1,
**caractérisé en ce que**
la distance des bords du trou oblong (6) entre les deux diamètres d'extrémité, depuis le grand diamètre d'extrémité (7) jusqu'au petit diamètre d'extrémité (8) diminue, la distance au point le plus étroit (a) étant plus petite que le diamètre de la rainure de boulon.

3. Maillon de fermeture de chaîne (1) selon la revendication 1,
**caractérisé en ce que**
le biseau (10) présente un bord de biseau (11) et une base de biseau (12) et la distance des bords du biseau depuis le grand diamètre d'extrémité (7) du trou oblong (6) diminue dans la direction de la dépression (13), la distance au point le plus étroit (d) des bords du biseau opposés (11) étant plus petite que le diamètre de la tête de boulon.

4. Maillon de fermeture de chaîne (1) selon la revendication 1,
**caractérisé en ce que**
le biseau (10) présente un bord de biseau (11) et une base de biseau (12) et la distance entre la base de biseau (12) et le côté intérieur du flasque extérieur (3) depuis le grand diamètre d'extrémité (7) du trou oblong (6) augmente dans la direction de la dépression (13), et un chanfrein de serrage (18) ou la base de biseau (12) forme ainsi un plan oblique.

5. Maillon de fermeture de chaîne (1) selon les revendications 2 à 4,
**caractérisé en ce que**
pour la fixation contre le démontage du maillon de fermeture de chaîne (1), le boulon de chaîne respectif (4) est fixé contre une ouverture accidentelle par un point de rétrécissement correspondant, qui est situé sur la partie de fermeture opposée (2), notamment sur le trou oblong (6) du flasque extérieur (3),
le point de rétrécissement concernant les bords du trou oblong ou les bords du biseau (11) qui se trouvent dans la région du petit diamètre d'extrémité (8) du trou oblong (6),
dont les distances sont inférieures par comparaison avec les bords du trou oblong ou les bords du biseau (11) dans la région du grand diamètre d'extrémité (7) ;
le point de rétrécissement correspondant du flasque extérieur (3) agissant sur la périphérie de la tête du boulon et/ou sur la périphérie de la rainure de boulon et/ou sur une face de rainure de boulon annulaire ou sur des combinaisons de ces possibilités.

6. Maillon de fermeture de chaîne (1) selon la revendication 1,
**caractérisé en ce que**
la hauteur de la tête de boulon (14) est inférieure ou égale à la profondeur de la dépression (13).

7. Maillon de fermeture de chaîne (1) selon les revendications 1 à 5,
**caractérisé en ce que**
l'on pratique sur la base du boulon (16) un évidement s'étendant axialement (17) et le diamètre de l'alésage du boulon (5) dans la région du côté extérieur du flasque extérieur (3) est élargi afin que le boulon de chaîne (4) soit connecté par élargissement de la base du boulon (16) après le montage, de manière fixe et par engagement par coopération de forme avec le flasque extérieur (3), afin que les deux forment la partie de fermeture (2).
